# FASCICULE DE BREVET EUROPEEN

(11) **EP 4 052 250 B1**
(45) Date de publication et mention de la délivrance du brevet: **26.02.2025**
(21) Numéro de dépôt: 20807838.6
(22) Date de dépôt: 28.10.2020
(51) Int. Cl.: G10K 11/168, G10K 11/172, B29C 45/14, B29C 45/26, F02C 7/045, B32B 3/12, B32B 3/26, B32B 5/02, F02K 1/82, B29K 63/00, B29K 75/00, B29K 83/00, B29K 101/10, B29K 101/12, B29K 105/08, B29K 105/12, B29L 31/00

(54) **PANNEAU D'ATTÉNUATION ACOUSTIQUE ET SES PROCÉDÉS DE FABRICATION**
SCHALLDÄMMPLATTE UND VERFAHREN ZU IHRER HERSTELLUNG
ACOUSTIC ATTENUATION PANEL AND METHODS FOR MANUFACTURING SAME

(30) Priorité: 31.10.2019 FR 1912265
(43) Date de publication de la demande: 07.09.2022
(73) Titulaire: Safran Nacelles, 76700 Gonfreville l'Orcher (FR)
(72) Inventeur: CARUEL, Pierre, 77550 Moissy Cramayel (FR); DESJOYEAUX, Bertrand, 77550 Moissy Cramayel (FR); LEROYER, Bertrand, 77550 Moissy Cramayel (FR); VERSAEVEL, Marc, 77550 Moissy Cramayel (FR); VALLEROY, Laurent Georges, 77550 Moissy Cramayel (FR)
(74) Mandataire: Germain Maureau
(86) Numéro de dépôt international: PCT/FR2020/051947
(87) Numéro de publication internationale: WO 2021/084206

(56) Documents cités:
- US-A1- 2015 044 413
- US-A1- 2018 114 516
- US-A1- 2018 162 542
- US-A1- 2019 264 614

## Description

### Domaine Technique

La présente invention se rapporte à un panneau d'atténuation acoustique destiné à absorber l'énergie sonore générée notamment par des turbomachines d'avions telles qu'un turboréacteur ou un turbopropulseur d'avion.

### Technique antérieure

Un avion est propulsé par un ou plusieurs ensembles propulsifs comprenant chacun un turboréacteur/turbopropulseur logé dans une nacelle tubulaire. Chaque ensemble propulsif est rattaché à l'avion par un mât situé généralement sous une aile ou au niveau du fuselage.

Une nacelle présente généralement une structure comprenant une section amont formant une entrée d'air en amont du moteur, une section médiane destinée à entourer une soufflante du turboréacteur, une section aval pouvant abriter des moyens d'inversion de poussée et destinée à entourer la chambre de combustion du turboréacteur, et est généralement terminée par une tuyère d'éjection dont la sortie est située en aval du turboréacteur.

L'entrée d'air sert à optimiser la captation d'air nécessaire à l'alimentation de la soufflante du turboréacteur dans toute l'enveloppe de vol et à canaliser l'air vers la soufflante.

L'entrée d'air comprend principalement une lèvre d'entrée d'air formant un bord d'attaque, rapportée sur une structure annulaire.

La structure annulaire comprend un carénage externe assurant la continuité aérodynamique externe de la nacelle et un carénage interne assurant la continuité aérodynamique interne de la nacelle, notamment avec le carter externe de soufflante au niveau de la section médiane. La lèvre d'entrée d'air assure en amont la jonction entre ces deux carénages.

Le carénage interne de l'entrée d'air est exposé à un flux d'air important et est situé à proximité des pâles de la soufflante. Il contribue de ce fait à la transmission du bruit provenant du turboréacteur vers l'extérieur de l'aéronef.

Aussi, il est connu de l'art antérieur d'équiper le carénage interne de l'entrée d'air de la nacelle d'un panneau acoustique en vue d'atténuer la transmission du bruit généré par le turboréacteur.

Typiquement, le panneau acoustique comporte une structure acoustique perforée et une structure alvéolaire de type nid d'abeille qui est assemblée notamment par collage sur la structure acoustique perforée.

La structure alvéolaire comporte une pluralité de cellules acoustiques, formant résonateurs de Helmholtz ou résonateurs quart d'onde, qui sont séparées entre elles par des cloisons périphériques.

La structure acoustique perforée est tournée vers la zone d'émission de bruit, de sorte que les ondes acoustiques peuvent pénétrer par les ouvertures de la structure acoustique perforée à l'intérieur des cellules acoustiques. L'énergie acoustique est dissipée par effet visco-thermique dans ces perforations.

La structure alvéolaire du panneau acoustique peut comporter une seule épaisseur de cellules, ou deux épaisseurs séparées par un septum micro-perforé pour améliorer les performances acoustiques du panneau, en particulier la largeur de la bande des fréquences absorbées.

Un inconvénient de ces types de panneaux réside dans le fait que la structure acoustique perforée présente une forte non-linéarité acoustique qui fait que son impédance de surface varie de façon significative avec le niveau acoustique et la vitesse de l'écoulement rasant, notamment du fait de l'interaction entre les perforations et l'écoulement de l'air.

Une solution de l'art antérieur consiste à rapporter sur la structure acoustique perforée, une couche poreuse par collage, équivalente acoustiquement à des perforations de diamètre inférieur aux perforation de la structure acoustique perforée, réduisant l'interaction avec l'écoulement de l'air.

Bien que cette solution permette de réduire la non-linéarité acoustique, une telle structure présente l'inconvénient majeur d'un assemblage supplémentaire, pénalisant en terme de temps de fabrication et de coût. De plus un mauvais assemblage peut entrainer des risques d'inhomogénéité acoustique. Enfin, il existe également un risque de corrosion de la couche poreuse exposée au flux d'air si elle est réalisée en matériau métallique, imposant des contraintes au niveau du choix des matériaux.

Une autre solution consiste à fournir un panneau d'atténuation acoustique formé de deux structures alvéolaires superposées, séparées par une couche poreuse.

Cependant ce type de panneaux rend le processus de fabrication plus long et coûteux, et introduit des risques d'inhomogénéités acoustiques entraînés par de possibles désalignements des nids d'abeilles induisant de faibles performances aérodynamiques. US 2018/162542 A1 divulgue un panneau d'atténuation acoustique.

### Exposé de l'invention

L'invention vise à pallier au moins l'un des inconvénients précités et concerne selon un premier aspect un panneau d'atténuation acoustique selon la revendication 1.

En d'autres termes, la couche acoustique poreuse formée du deuxième matériau est fixée à une surface de la structure acoustique perforée par intrication du premier matériau dans le deuxième matériau et/ou du deuxième matériau dans le premier matériau, c'est-à-dire que la couche acoustique poreuse est fixée à une surface de la structure acoustique perforée par intrication du premier matériau et du deuxième matériau entre eux.

Ainsi, grâce au panneau d'atténuation acoustique selon l'invention dans lequel, la structure alvéolaire et la structure acoustique perforée sont formées en une seule pièce et dans lequel la liaison entre la structure acoustique perforée et la couche poreuse est obtenue par intrication de leur matériau, la linéarité des panneaux est améliorée de sorte que les performances aérodynamiques sont optimisées. Les panneaux sont robustes face aux intempéries et plus simples de fabrication.

Selon d'autres caractéristiques de l'invention, le panneau d'atténuation acoustique de l'invention comporte l'une ou plusieurs des caractéristiques optionnelles suivantes considérées seules ou selon toutes les combinaisons possibles.
- La pièce unique formée de la structure alvéolaire et de la structure acoustique perforée, et la couche acoustiquement poreuse sont en matériaux identiques.
- La pièce unique formée de la structure alvéolaire et de la structure acoustique perforée, et la couche acoustiquement poreuse sont en matériaux différents.
- Des perforations de la structure acoustique perforée sont espacées les unes des autres par une distance évolutive suivant une direction axiale A.
- Les perforations de la structure acoustique perforée présentent une dimension S croissante suivant une direction axiale A.
- Les perforations de la structure acoustique perforée présentent une forme sensiblement rectangulaire.
- les perforations de la structure acoustique perforée représentent au moins 20% de la surface de ladite structure, de préférence au moins 40% de la surface de ladite structure, encore plus préférentiellement au moins 60% de la surface de ladite structure.

La couche acoustique poreuse présente des trous de dimensions inférieures aux dimensions S des perforations de la structure acoustique perforée.
- La couche acoustique poreuse présente des trous de dimension croissante suivant la direction axiale A.
- la couche acoustique poreuse présente une architecture tissée comprenant des entrecroisements de fils élémentaires ou de mèches de fibres,
- les fils ou mèches de fibres de la couche acoustique poreuse sont partiellement liés entre eux aux niveaux de croisements et/ou selon des segments de bords les uns avec les autres, c'est-à-dire que les fils ou mèches de fibres sont partiellement collés entre eux par des parties adjacentes parallèles.

La structure acoustique perforée et les cloisons périphériques présentent une épaisseur comprise entre 0,5 et 5 millimètres, de préférence la structure acoustique perforée et les cloisons périphériques présentent une épaisseur de 0,5 à 2 millimètres.

Le panneau d'atténuation acoustique comprend un couvercle amovible, agencé sur une face de la structure alvéolaire opposée à la structure acoustique perforée.
- La structure acoustique perforée peut être en matériau plastique, par exemple en matériau thermoplastique ou en matériau thermodurcissable tel qu'en polyuréthane, en silicone, ou en époxyde, en matériau composite à matrice thermoplastique ou thermodurcissable renforcée de fibres courtes ou de fibres longues telles que des fibres polyester, des fibres polyéthylènes, des fibres de verre, des fibres de carbone, des fibres de kevlar, des fibres synthétiques, ou encore alliages métalliques.
- La couche acoustique poreuse peut être en matériau plastique comprenant par exemple des fils en plastiques, en matériau composite comprenant par exemple des fils en composites tels que des fibres enrobées d'une matrice thermoplastique ou thermodurcissable, ou encore en matériau métallique comprenant par exemple des fils métalliques d'alliages légers ou d'alliages ferreux.

Selon un autre aspect, l'invention se rapporte à une entrée d'air d'une nacelle, disposée en amont d'une soufflante, l'entrée d'air comportant une face intérieure orientée en regard de la soufflante, ladite face intérieure recevant au moins un panneau d'atténuation acoustique tel que précédemment décrit.

Selon un autre aspect, l'invention se rapporte à un procédé de fabrication d'un panneau d'atténuation acoustique tel que décrit précédemment au moyen d'un outillage de moulage comprenant au moins un moule et un contre-moule, le procédé comprenant les étapes de :
- Pincement de la couche poreuse entre ledit au moins un moule et le contre moule,
- Injection de matériau destiné à former une structure acoustique perforée et une structure alvéolaire en une pièce dans l'outillage de moulage,
- Intrication du matériau destiné à former une structure acoustique perforée et une structure alvéolaire avec le matériau de la couche poreuse,
- Retrait du panneau d'atténuation acoustique formé de l'outillage de moulage.

Selon d'autres caractéristiques de l'invention, le procédé comporte l'une ou plusieurs des caractéristiques optionnelles suivantes considérées seules ou selon toutes les combinaisons possibles.
-ledit au moins un moule présente une forme destinée à former une cellule acoustique de la structure alvéolaire.
- ledit au moins un moule présente au moins un poinçon destiné à former une perforation dans la structure acoustique perforée.
- les surfaces des poinçons et du contre moule sont revêtues d'un matériau souple tel que le silicone ou le fluorocarbone.
- les surfaces des poinçons et du contre moule sont en matériau rigide.

D'autres caractéristiques et avantages de l'invention apparaîtront à la lecture de la description nullement limitative qui suit et des figures annexées qui illustrent de manière schématique le panneau d'atténuation acoustique selon l'invention.

### Brève description des dessins

[Fig. 1] La figure 1 est vue partielle en coupe transversale d'un panneau d'atténuation acoustique selon l'invention
[Fig. 2] La figure 2 une vue agrandie de la vue en coupe transversale du panneau d'atténuation acoustique.
[Fig. 3] La figure 3 est une vue en perspective du panneau d'atténuation acoustique selon un mode de réalisation de l'invention.
[Fig. 4] La figure 4 est une vue partielle en perspective du panneau d'atténuation acoustique selon un mode de réalisation de l'invention.
[Fig. 5] La figure 5 est une vue partielle en perspective du panneau d'atténuation acoustique selon un mode de réalisation de l'invention.
[Fig. 6] La figure 6 est une représentation schématique d'un procédé de fabrication d'un panneau acoustique selon l'invention.
[Fig. 7] La figure 7 est une illustration d'un ensemble propulsif comprenant une nacelle dont l'entrée d'air reçoit un panneau d'atténuation acoustique selon l'invention.

### Description des modes de réalisation

Par souci de simplification, les éléments identiques sont repérés par des signes de référence identiques sur l'ensemble des figures.

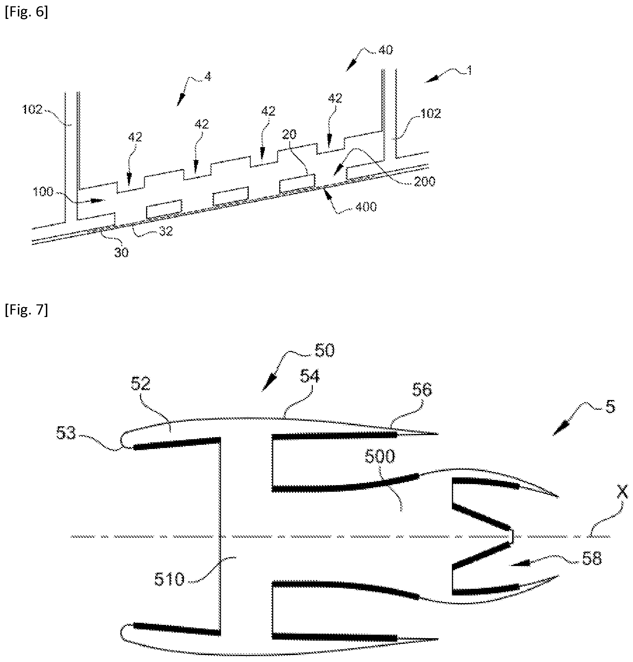

A noter que dans la description et dans les revendications, les termes amont et aval doivent s'entendre par rapport à la circulation du flux d'air à l'intérieur de l'ensemble propulsif formé par la nacelle et le turboréacteur, c'est-à-dire de la gauche vers la droite en références à la figure 7.

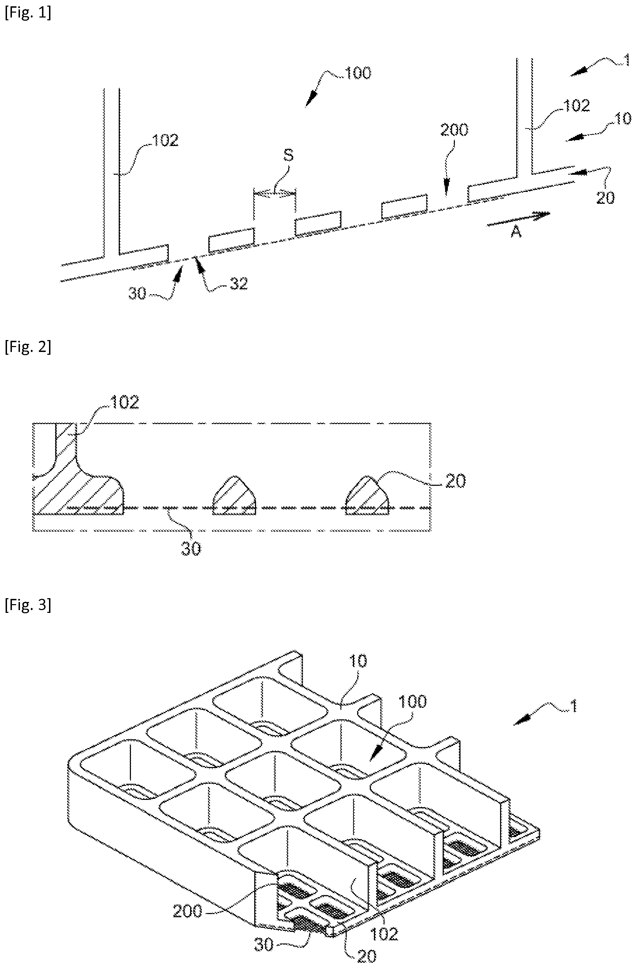

La figure 1 est une vue agrandie en coupe transversale d'un panneau d'atténuation acoustique (figure 3) selon l'invention.

Le panneau acoustique 1 comprend une structure alvéolaire 10, une structure acoustique perforée 20 et une couche acoustique poreuse 30 fixée à la structure acoustique perforée 20.

Ainsi la structure alvéolaire 10 du panneau acoustique selon l'invention présente une face libre et une face pourvue d'une structure acoustique perforée 20 et d'une couche acoustique poreuse 30.

La structure alvéolaire 10 et la structure acoustique perforée 20 sont formées en une pièce unique, c'est-à-dire qu'elles sont réalisées en une seule pièce.

Ainsi on s'affranchit des risques d'érosion, d'abrasion, de décollement ou de délamination des panneaux acoustique de l'art antérieur dans lesquelles les deux structures sont reliées entre elles par exemple par collage.

La structure alvéolaire 10 comporte une pluralité de cellules acoustiques 100 qui sont séparées entre elles par des cloisons périphériques 102.

Dans le présent exemple, chaque cellule présente une forme carrée de 5 centimètres de côté.

Dans une variante de réalisation, chaque cellule peut présenter une forme rectangulaire comme l'illustre la figure 3.

Les cellules acoustiques ne sont pas limitées au formes précédemment décrites et peuvent présenter d'autres formes polygonales telles qu'un triangle, un pentagone, un hexagone etc.

Chaque cloison périphérique 102 s'étend à partir de la structure acoustique perforée 200 selon un angle de 90°. En d'autres termes, chaque cloison périphérique s'étend sensiblement perpendiculairement à la structure acoustique perforée 200.

Ces cloisons 102 peuvent comporter des excroissances ou taraudages (non représentés) destinés à permettre de fixer le panneau d'atténuation acoustique dans une nacelle (figure7). Dans des modes de réalisation préférés, le panneau acoustique est destiné à être fixé ou collé à un conduit de la nacelle pour assurer les fonctions de surface aérodynamique et d'atténuateur acoustique de ce conduit de nacelle. Dans le cas d'une fixation, la surface entre le panneau et la nacelle peut présenter un jeu. A ce titre, il est prévu un aménagement dans le panneau d'atténuation acoustique 1 pour supporter un élément d'étanchéité tel qu'un joint d'étanchéité.

De préférence, la structure acoustique perforée 20 et les cloisons périphériques 102 présentent une épaisseur comprise entre 0,5 et 5 millimètres. Par exemple, la structure acoustique perforée 20 présente une épaisseur comprise entre 0,5 et 2 millimètres, et les cloisons périphériques 102 présentent une épaisseur comprise entre 1 et 5 millimètres, encore plus préférentiellement entre 1 et 3 millimètres.

Cette épaisseur relativement fine est particulièrement préférée dans les traitements acoustiques.

La structure acoustique perforée 20 comprend une pluralité de perforations 200 formées de manière régulière dans la structure acoustique perforée 20.

Dans un mode de réalisation non représenté, les perforations 200 peuvent être espacées les unes des autres par une distance évolutive suivant la direction axiale A.

Le terme direction axiale doit s'entendre par rapport à la circulation du flux d'air telle que représenté par la flèche A de la figure 1.

Comme l'illustre la figure 3, chaque perforation 200 de la structure acoustique perforée présente une forme sensiblement rectangulaire au sommet arrondis. Dans le présent exemple, chaque cellule acoustique 100 comprend quatre perforations 200.

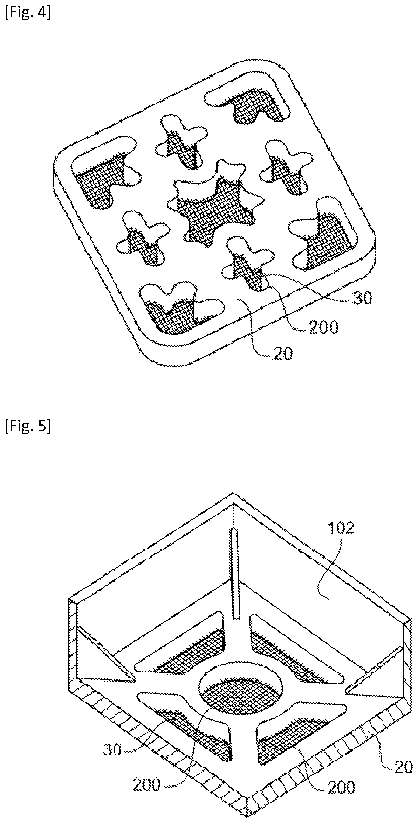

L'invention n'est pas limitée à ce type de forme, en effet la forme des perforations 200 peut être variable et correspondre à des formes fractales par exemple comme l'illustre la figure 4.

Dans une variante de réalisation, les perforations 200 peuvent présenter des formes différentes comme l'illustre la figure 5 dans laquelle au moins une perforation 200 est de forme circulaire et au moins une perforation est de forme trapézoïdale.

De la même manière, la dimension S des perforations 200 peut varier et être par exemple croissante suivant la direction axiale A. Cette distribution évolutive permet en outre de fournir des dimensions S plus grandes à proximité de la soufflante et plus petite à l'extrémité distale de cette dernière pour fournir un traitement acoustique qui soit proportionnel au niveau sonore.

De préférence, la dimension des perforations est d'au moins 1 millimètre, de préférence au moins 2 millimètres.

Le panneau acoustique 1 présente une couche acoustique poreuse 30. Par couche poreuse on entend une couche présentant au moins un trou perforé par divers moyens mécanique ou un trou formé par la porosité du matériau de la couche acoustique poreuse 30.

La couche acoustique poreuse 30 est agencée sur la surface de la structure acoustique perforée 20 opposée à la face de ladite structure 20 à partir de laquelle s'étendent les cloisons périphériques 102. La couche acoustique poreuse 30 s'étend parallèlement à la structure acoustique perforée 20

La couche acoustique poreuse 30 est fixée à la structure acoustique perforée 20 de manière rigide, par une intrication d'au moins l'un des matériaux avec le deuxième matériau. La figure 2 illustre de façon plus détaillée la fixation entre couche acoustique poreuse 30 et la structure acoustique perforée 20. La couche acoustique poreuse 30 est fixée à la structure acoustique perforée 20 par une intrication des matériaux respectifs de la couche acoustique poreuse 30 et de la structure acoustique perforée.

Par intrication on entend une diffusion de matériau dans un autre matériau, une pénétration de matériau pour créer des ponts de matière entre les composants.

Cette intrication est obtenue lors de la fabrication du panneau d'atténuation acoustique qui sera détaillée en figure 2.

Ainsi il est possible de s'affranchir des techniques de fixation par collage de l'art antérieur qui engendrent des problèmes de tenue et de décollement au court du temps, en particulier dans le cas de couches poreuses en matériaux susceptibles de corroder.

La couche acoustique poreuse 30 présente des trous 32 de dimensions inférieures aux dimensions S des perforations 200 de la structure acoustique perforée 20.

Dans un mode de réalisation non représenté, la dimension des trous 32 de la couche acoustique poreuse 30 peut varier et être par exemple croissante suivant la direction axiale A.

Selon un mode de réalisation de l'invention, la structure alvéolaire 10, la structure acoustique perforée 20 et la couche acoustique poreuse 30 sont en matériaux identiques.

Selon un premier exemple, la structure alvéolaire 10, la structure acoustique perforée 20 et la couche acoustique poreuse 30 sont en matériau métallique, de préférence en aluminium, encore plus préférentiellement, en un alliage d'aluminium choisi dans la série 6000.

La couche acoustique poreuse 30 peut être une tôle métallique micro perforée par exemple par une technique de micro-perçage réalisée par laser de manière à former une couche semblable à un grillage.

Dans une variante, la couche acoustique poreuse 30 peut être un grillage très fin en alliage d'aluminium d'une même série ou d'une série d'alliage compatible telle qu'un alliage choisi dans la série 5000.

Selon un deuxième exemple, la structure alvéolaire 10, la structure acoustique perforée 20 et la couche acoustique poreuse 30 sont en matériau composite, de préférence dans un matériau formé d'une matrice thermoplastique ou thermodurcissable.

Selon un autre mode de réalisation de l'invention, la structure alvéolaire 10, la structure acoustique perforée 20 et la couche acoustique poreuse 30 sont en matériaux différents. Par exemple, la structure alvéolaire 10 et la structure acoustique perforée 20 sont en matériaux composites et la couche acoustique poreuse 30 est en matériau métallique.

Dans un mode de réalisation non représenté, le panneau d'atténuation acoustique 1 peut comprendre un couvercle amovible (non représenté), agencé sur la face de la structure alvéolaire opposée à la face comprenant la structure acoustique perforée 20.

La figure 6 est une illustration d'un procédé de fabrication du panneau d'atténuation acoustique 1 selon un mode de réalisation de l'invention.

Dans le présent exemple, le panneau d'atténuation acoustique est réalisé au moyen d'un outillage de moulage 4 comprenant une pluralité de moules 40 et un contre moule 400.

Dans le présent exemple, chaque moule 40 présente une forme destinée à former une cellule acoustique 100. Chaque moule comprend une pluralité de poinçons 42 complémentaires aux perforations 200, destinés à former un ajourage dans la structure acoustique perforée 20. Dans le présent exemple, un moule comprend quatre poinçons.

Dans un premier mode de réalisation une couche poreuse 30 est placée entre la pluralité de moules 40 et le contre-moule 400. A ce titre l'outillage de moulage 4 présente un espace situé entre les moules 40 et le contre-moule 400 correspondant à l'épaisseur de la couche poreuse 30.

La couche poreuse 30 est pincée entre les moules 40 et le contre-moule 400 par exemple par une mise en mouvement du moule 40 ou une mise en mouvement du contre moule 400.

Le matériau utilisé pour réaliser la structure acoustique perforée 20 et la structure alvéolaire 10 en une pièce est injecté dans l'outillage de moulage 4 de façon à ce qu'il s'infiltre dans les parties du moule situées entre deux poinçons adjacents et fusionne avec le matériau de la couche poreuse ou en enrobe le matériau.

Ainsi la couche acoustique poreuse 30 est fixée à la structure acoustique perforée 20 au niveau des parties P alentour aux perforations 200.

Les matériaux sont ensuite durcis et le panneau acoustique ainsi créé est démoulé par exemple par un retrait des moules 40 puis un retrait du panneau acoustique créé du contre moule 400.

Dans une première variante, les surfaces des poinçons 42 et du contre moule 400 sont revêtues d'un matériau souple tel que le silicone ou le fluorocarbone de sorte que ceux-ci se déforment pour empêcher une migration de matière dans les perforations 200 en formation. De plus ce revêtement mou permet de ne pas déformer la couche acoustique poreuse lors de l'étape de pincement.

Dans une autre variante, les surfaces des poinçons 42 et du contre moule 400 peuvent être en matériau rigide, le pincement de la couche poreuse entraine une déformation de celle-ci par écrouissage. Dans une solution particulière, le pincement est légèrement plus important dans les zones de formations des perforations 200 pour empêcher une migration de matière.

Dans un deuxième mode de réalisation, la structure acoustique perforée 20 et la structure alvéolaire 10 formées en une pièce unique sont réalisées lors d'une première opération à l'aide des moules 40 et du contre moule 400 pour former les cellules acoustiques 100 et un ajourage de la structure acoustique perforée. La pièce unique est durcie puis démoulée.

La couche acoustique poreuse 30 est placée contre la structure acoustique perforée 20.

La liaison entre la couche acoustique poreuse 30 et la structure acoustique perforée 20 est obtenue par fusion ou dissolution partielle soit du matériau de la pièce unique formée de la structure acoustique perforée 20 et de la structure alvéolaire 10, soit de la couche poreuse 30, soit des deux, de sorte que les matériaux s'intriquent entre eux. La fusion peut être réalisée par ultrason, induction, effet joule ou par chauffage des moules 40 ou du contre moule 400.

Dans un mode de réalisation, la structure acoustique perforée 20 présente des irrégularités, par exemple une surface micro-accidentée c'est-à-dire qui ne soit pas lisse afin d'améliorer l'ancrage du matériau de la couche poreuse 30 dans la structure acoustique perforée 20.

Le panneau d'atténuation acoustique nouvellement formé est refroidi de manière à former une liaison mécanique et/ou moléculaire entre les composants du panneau.

Grâce à ces modes de fabrication, il est possible de venir interposer de façon fiable et efficace la couche acoustique poreuse 30 sur la structure acoustique perforée 20. La réalisation des perforations 200 du panneau acoustique 1 est optimisée et la dimension S des perforations 200 est contrôlée.

Le panneau d'atténuation acoustique 1 peut être formé en une pièce unique, circulaire, de 360° correspondant aux dimensions de la nacelle ou être sectorisé en une pluralité de panneaux assemblables, par exemple en vingt-quatre panneaux présentant une déformation à 15°. A ce titre le contre moule 400 peut présenter une forme concave ou convexe de l'ordre de 15° de manière à ce que le panneau 1 présente un degré de déformation souhaité. La disposition en panneaux acoustiques assemblables facilite le remplacement d'un panneau endommagé dans la nacelle.

La réalisation de panneau d'atténuation acoustique n'est pas limitée aux procédés de fabrication tels que décrits précédemment et peut par exemple être réalisée par fabrication additive sans utiliser l'outillage de moulage.

Ce mode de réalisation présente l'avantage d'optimiser la conception du panneau d'atténuation acoustique, en particulier de la structure acoustique perforée dans laquelle des perforations de forme complexe peuvent être réalisées. Par ailleurs la matière entourant les perforations peut présenter une épaisseur ou largeur variable permettant ainsi de fournir des structures acoustiques à multiples échelles de raideur.

La figure 7 est une illustration d'un ensemble propulsif 5 s'étendant selon un axe longitudinal X comprenant une nacelle courte 50 et un turboréacteur 500. La nacelle 50 présente une structure comprenant une section amont formant une entrée d'air 52, une section médiane 54 comprenant des capots de soufflante destinés à entourer une soufflante 510 du turboréacteur 500, une section avale 56 comprenant un inverseur de poussée et destinée à entourer la chambre de combustion du turboréacteur et une tuyère d'éjection 58.

L'entrée d'air 52 comprend une face intérieure 53 orientée en regard de la soufflante 510, ladite face intérieure reçoit au moins un panneau d'atténuation acoustique 1 selon les exemples qui viennent d'être décrits.

Comme l'illustre la figure 7, d'autres composants de la nacelle tels que l'inverseur de poussée par exemple, peuvent recevoir le panneau d'atténuation acoustique 1 selon les exemples qui viennent d'être décrits.

Le panneau d'atténuation acoustique peut trouver application dans plusieurs implantations d'une nacelle telle qu'une entrée d'air, une entrée d'air étendue, au niveau d'un carter de soufflante ou encore d'un inverseur de poussée.

Bien évidemment, l'invention n'est pas limitée aux exemples qui viennent d'être décrits et de nombreux aménagements peuvent être apportés à ces exemples sans sortir du cadre de l'invention telle que définie par les revendications annexées. Notamment, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Panneau d'atténuation acoustique (1) comprenant :
- une structure alvéolaire (10) comportant une pluralité de cellules acoustiques (100) séparées entre elles par des cloisons périphériques (102),
- une structure acoustique perforée (20),
la structure acoustique perforée (20) et la structure alvéolaire (10) étant formée en une pièce unique dans un premier matériau, et
- une couche acoustique poreuse (30) formée d'un deuxième matériau, fixée à une surface de la structure acoustique perforée (20) par intrication du premier matériau dans le deuxième matériau et/ou du deuxième matériau dans le premier matériau, **caractérisé en ce que**:
- chaque perforation (200) de la structure acoustique perforée présente une forme sensiblement rectangulaire au sommet arrondis, ou
- la forme des perforations (200) correspond à des formes fractales, ou
- au moins une perforation (200) est de forme circulaire et au moins une perforation est de forme trapézoïdale.

2. Panneau d'atténuation acoustique (1) selon la revendication précédente **caractérisé en ce que** la pièce unique formée de la structure alvéolaire (10) et de la structure acoustique perforée (20), et la couche acoustique poreuse (30) sont en matériaux identiques.

3. Panneau d'atténuation acoustique (1) selon la revendication 1 **caractérisé en ce que** la pièce unique formée de la structure alvéolaire (10) et de la structure acoustique perforée (20), et la couche acoustique poreuse (30) sont en matériaux différents.

4. Panneau d'atténuation acoustique (1) selon l'une des revendications précédentes **caractérisé en ce que** des perforations (200) de la structure acoustique perforée (20) sont espacées les unes des autres par une distance évolutive suivant une direction axiale A.

5. Panneau d'atténuation acoustique (1) selon l'une des revendications précédentes **caractérisé en ce que** des perforations (200) de la structure acoustique perforée (20) présente une dimension S croissante suivant une direction axiale A.

6. Panneau d'atténuation acoustique (1) selon l'une des revendications précédentes **caractérisé en ce que** des perforations (200) de la structure acoustique perforée (20) présentent une forme sensiblement rectangulaire.

7. Panneau d'atténuation acoustique (1) selon l'une quelconque des revendications précédentes **caractérisé en ce que** les perforations de la structure acoustique perforée représentent au moins 20% de la surface de ladite structure, de préférence au moins 40% de la surface de ladite structure, encore plus préférentiellement au moins 60% de la surface de ladite structure.

8. Panneau d'atténuation acoustique (1) selon l'une quelconque des revendications précédentes **caractérisé en ce que** la couche acoustique poreuse (30) présente des trous (32) de dimensions inférieures aux dimensions S des perforations (200) de la structure acoustique perforée (20).

9. Panneau d'atténuation acoustique (1) selon l'une quelconque des revendications précédentes **caractérisé en ce que** la couche acoustique poreuse (30) présente des trous (32) de dimension croissante suivant une direction axiale A.

10. Panneau d'atténuation acoustique (1) selon l'une quelconque des revendications précédentes dans lequel la structure acoustique perforée (20) et les cloisons périphériques (201) présentent une épaisseur comprise entre 1 et 5 millimètres, de préférence la structure acoustique perforée (20) et les cloisons périphériques (201) présentent une épaisseur de 1 à 2 millimètres.

11. Panneau d'atténuation acoustique (1) **caractérisé en ce que** le panneau d'atténuation acoustique (1) comprend un couvercle amovible agencé sur une face de la structure alvéolaire (10) opposée à la structure acoustique perforée (20).

12. Entrée d'air (52) d'une nacelle (50), disposée en amont d'une soufflante (510), l'entrée d'air (52) comportant une face intérieure orientée en regard de la soufflante (510), ladite face intérieure recevant au moins un panneau d'atténuation acoustique (1) selon l'une des revendications 1 à 11.

13. Procédé de fabrication d'un panneau d'atténuation acoustique selon l'une des revendications précédentes au moyen d'un outillage de moulage (4) comprenant au moins un moule (40) et un contre-moule (400), le procédé comprenant les étapes de :
- Placement d'une couche acoustique poreuse (30) dans un espace situé entre ledit au moins un moule (40) et le contre-moule (400),
- Pincement de la couche acoustique poreuse (30) entre ledit au moins un moule (40) et le contre-moule (400),
- Injection de matériau destiné à former une structure acoustique perforée (20) et une structure alvéolaire (10) en une pièce dans l'outillage de moulage (4),
- Intrication du matériau destiné à former une structure acoustique perforée (20) et une structure alvéolaire (10) avec le matériau de la couche poreuse (30),
- Retrait du panneau d'atténuation acoustique (1) formé de l'outillage de moulage (4).

14. Procédé de fabrication selon la revendication 13 **caractérisé en ce que** ledit au moins un moule (40) présente au moins un poinçon (42) destiné à former une perforation (200) dans la structure acoustique perforée (20).

15. Procédé de fabrication selon la revendication 14 **caractérisé en ce que** des surfaces dudit au moins un poinçon (42) et du contre moule (400) sont revêtues d'un matériau souple tel que le silicone ou le fluorocarbone.

16. Procédé de fabrication selon l'une des revendications 14 ou 15 **caractérisé en ce que** des surfaces des poinçons (42) et du contre moule (400) sont en matériau rigide.

## Patentansprüche

1. Schalldämmplatte (1), umfassend:
- eine Wabenstruktur (10), die mehrere Akustikzellen (100) umfasst, die durch umlaufende Trennwände (102) voneinander getrennt sind,
- eine perforierte Akustikstruktur (20),
wobei die perforierte Akustikstruktur (20) und die Wabenstruktur (10) aus einem einzigen Teil in einem ersten Material gebildet sind, und
- eine poröse Akustikschicht (30) gebildet aus einem zweiten Material, die durch Verflechtung des ersten Materials im zweiten Material und/ oder des zweiten Materials im ersten Material an einer Oberfläche der perforierten Akustikstruktur (20) befestigt ist, **dadurch gekennzeichnet, dass**:
- jede Perforation (200) der perforierten Akustikstruktur an der abgerundeten Spitze eine im Wesentlichen rechteckige Form aufweist, oder
- die Form der Perforationen (200) Fraktalformen entspricht, oder
- mindestens eine Perforation (200) kreisförmig und mindestens eine Perforation trapezförmig ist.

2. Schalldämmplatte (1) nach dem vorhergehenden Anspruch, **dadurch gekennzeichnet, dass** das aus der Wabenstruktur (10) und der perforierten Akustikstruktur (20) gebildete Einzelteil und die poröse Akustikschicht (30) aus identischen Materialien bestehen.

3. Schalldämmplatte (1) nach Anspruch 1, **dadurch gekennzeichnet, dass** das aus der Wabenstruktur (10) und der perforierten Akustikstruktur (20) gebildete Einzelteil und die poröse Akustikschicht (30) aus unterschiedlichen Materialien bestehen.

4. Schalldämmplatte (1) nach einem der vorhergehenden Ansprüche, **dadurch gekennzeichnet, dass** Perforationen (200) der perforierten Akustikstruktur (20) um einen sich entwickelnden Abstand in einer axialen Richtung A voneinander entfernt sind.

5. Schalldämmplatte (1) nach einem der vorhergehenden Ansprüche, **dadurch gekennzeichnet, dass** Perforationen (200) der perforierten Akustikstruktur (20) ein steigendes Maß S in einer axialen Richtung A aufweisen.

6. Schalldämmplatte (1) nach einem der vorhergehenden Ansprüche, **dadurch gekennzeichnet, dass** Perforationen (200) der perforierten Akustikstruktur (20) eine im Wesentlichen rechteckige Form aufweisen.

7. Schalldämmplatte (1) nach einem der vorhergehenden Ansprüche, **dadurch gekennzeichnet, dass** die Perforationen der perforierten Akustikstruktur mindestens 20 % der Oberfläche der Struktur, vorzugsweise mindestens 40 % der Oberfläche der Struktur, noch vorzugsweise mindestens 60 % der Oberfläche der Struktur darstellen.

8. Schalldämmplatte (1) nach einem der vorhergehenden Ansprüche, **dadurch gekennzeichnet, dass** die poröse Akustikschicht (30) Löcher (32) aufweist, die kleiner sind als die Abmessungen S der Perforationen (200) der perforierten Akustikstruktur (20).

9. Schalldämmplatte (1) nach einem der vorhergehenden Ansprüche, **dadurch gekennzeichnet, dass** die poröse Akustikschicht (30) Löcher (32) mit zunehmender Abmessung in einer axialen Richtung A aufweist.

10. Schalldämmplatte (1) nach einem der vorhergehenden Ansprüche, wobei die perforierte Akustikstruktur (20) und die umlaufenden Trennwände (201) eine Dicke zwischen 1 und 5 Millimetern aufweisen, vorzugsweise die perforierte Akustikstruktur (20) und die umlaufenden Trennwände (201) eine Dicke von 1 bis 2 Millimetern aufweisen.

11. Schalldämmplatte (1), **dadurch gekennzeichnet, dass** die Schalldämmplatte (1) eine abnehmbare Abdeckung umfasst, die auf einer der perforierten Schallstruktur (20) gegenüberliegenden Seite der Wabenstruktur (10) angeordnet ist.

12. Lufteinlass (52) eines Maschinenhauses (50), vor einem Gebläse (510) angeordnet, wobei der Lufteinlass (52) eine dem Gebläse (510) zugewandte Innenseite aufweist, wobei die Innenseite mindestens eine Schalldämmplatte (1) nach einem der Ansprüche 1 bis 11 aufnimmt.

13. Verfahren zur Herstellung einer Schalldämmplatte nach einem der vorhergehenden Ansprüche mittels eines Formwerkzeugs (4), das mindestens eine Form (40) und eine Gegenform (400) umfasst, wobei das Verfahren folgende Schritte umfasst:
- Platzieren einer porösen Akustikschicht (30) in einem Raum zwischen der wenigstens einen Form (40) und der Gegenform (400),
- Einklemmen der porösen Akustikschicht (30) zwischen der wenigstens einen Form (40) und der Gegenform (400),
- Einspritzen von Material zur Bildung einer perforierten Akustikstruktur (20) und einer Wabenstruktur (10) aus einem Stück in das Formwerkzeug (4),
- Verflechtung des Materials zur Bildung einer perforierten Akustikstruktur (20) und einer Wabenstruktur (10) mit dem Material der porösen Schicht (30),
- Entfernen der Schalldämmplatte (1) aus dem Formwerkzeug (4).

14. Verfahren zur Herstellung nach Anspruch 13, **dadurch gekennzeichnet, dass** die wenigstens eine Form (40) wenigstens einen Stanzstempel (42) aufweist, der dazu bestimmt ist, eine Perforation (200) in der perforierten Akustikstruktur (20) zu bilden.

15. Verfahren zur Herstellung nach Anspruch 14, **dadurch gekennzeichnet, dass** Oberflächen des wenigstens einen Stanzstempels (42) und der Gegenform (400) mit einem weichen Material wie Silikon oder Fluorkohlenstoff beschichtet sind.

16. Verfahren zur Herstellung nach einem der Ansprüche 14 oder 15, **dadurch gekennzeichnet, dass** die Oberflächen der Stanzstempel (42) und der Gegenform (400) aus starrem Material bestehen.

## Claims

1. An acoustic attenuation panel (1) comprising:
- an alveolar structure (10) including a plurality of acoustic cells (100) separated from each other by peripheral partitions (102),
- a perforated acoustic structure (20),
the perforated acoustic structure (20) and the alveolar structure (10) being formed in a single piece in a first material, and
- a porous acoustic layer (30) formed of a second material, fastened to a surface of the perforated acoustic structure (20) by entanglement of the first material in the second material and/or the second material in the first material,
**characterized in that**
- each perforation (200) of the perforated acoustic structure has a substantially rectangular shape with rounded tops, or
- the shape of the perforations (200) corresponds to fractal shapes, or
- at least one perforation (200) is circular in shape and at least one perforation is trapezoidal in shape.

2. The acoustic attenuation panel (1) according to the preceding claim, **characterized in that** the single piece formed of the alveolar structure (10) and of the perforated acoustic structure (20), and the porous acoustic layer (30) are made of identical materials.

3. The acoustic attenuation panel (1) according to claim 1, **characterized in that** the single piece formed of the alveolar structure (10) and of the perforated acoustic structure (20), and the porous acoustic layer (30) are made of different materials.

4. The acoustic attenuation panel (1) according to any of the preceding claims, **characterized in that** perforations (200) of the perforated acoustic structure (20) are spaced apart from each other by a distance that evolves in an axial direction A.

5. The acoustic attenuation panel (1) according to any of the preceding claims, **characterized in that** perforations (200) of the perforated acoustic structure (20) have a dimension S that increases in an axial direction A.

6. The acoustic attenuation panel (1) according to any of the preceding claims, **characterized in that** perforations (200) of the perforated acoustic structure (20) have a substantially rectangular shape.

7. The acoustic attenuation panel (1) according to any one of the preceding claims, **characterized in that** the perforations of the perforated acoustic structure represent at least 20% of the surface area of said structure, preferably at least 40% of the surface area of said structure, even more preferably at least 60% of the surface area of said structure.

8. The acoustic attenuation panel (1) according to any one of the preceding claims, **characterized in that** the porous acoustic layer (30) has holes (32) with dimensions smaller than the dimensions S of the perforations (200) of the perforated acoustic structure (20).

9. The acoustic attenuation panel (1) according to any one of the preceding claims, **characterized in that** the porous acoustic layer (30) has holes (32) with dimension that increases in an axial direction A.

10. The acoustic attenuation panel (1) according to any one of the preceding claims, wherein the perforated acoustic structure (20) and the peripheral partitions (201) have a thickness comprised between 1 and 5 millimeters, preferably the perforated acoustic structure (20) and the peripheral partitions (201) have a thickness of 1 to 2 millimeters.

11. The acoustic attenuation panel (1) **characterized in that** the acoustic attenuation panel (1) comprises a removable cover arranged on a face of the alveolar structure (10) opposite the perforated acoustic structure (20).

12. An air inlet (52) of a nacelle (50), disposed upstream of a fan (510), the air inlet (52) including an inner face oriented opposite the fan (510), said inner face receiving at least one acoustic attenuation panel (1) according to any of claims 1 to 11.

13. A method for manufacturing an acoustic attenuation panel according to any of the preceding claims by means of a molding tool (4) comprising at least one mold (40) and a counter-mold (400), the method comprising the steps of:
- Placing a porous acoustic layer (30) in a space located between said at least one mold (40) and the counter-mold (400),
- Pinching the porous acoustic layer (30) between said at least one mold (40) and the counter-mold (400),
- Injecting material intended to form a perforated acoustic structure (20) and a alveolar structure (10) in one piece in the molding tool (4),
- Entangling the material intended to form a perforated acoustic structure (20) and a alveolar structure (10) with the material of the porous layer (30),
- Removing the formed acoustic attenuation panel (1) from the molding tool (4).

14. The manufacturing method according to claim 13, **characterized in that** said at least one mold (40) has at least one punch (42) intended to form a perforation (200) in the perforated acoustic structure (20).

15. The manufacturing method according to claim 14, **characterized in that** surfaces of said at least one punch (42) and of the counter-mold (400) are coated with a flexible material such as silicone or fluorocarbon.

16. The manufacturing method according to any of claims 14 or 15, **characterized in that** surfaces of the punches (42) and of the counter-mold (400) are made of a rigid material.
